Europäisches Patentamt

European Patent Office

Office européen des brevets

(19)

(11) Veröffentlichungsnummer: **0 075 333**
**B1**

(12) **EUROPÄISCHE PATENTSCHRIFT**

(45) Veröffentlichungstag der Patentschrift:
27.12.85.

(51) Int. Cl.⁴: **B 23 Q 11/04**, B 23 Q 5/58,
F 16 P 5/00

(21) Anmeldenummer: 82108791.3

(22) Anmeldetag: 22.09.82

(54) **Überlastsicherung für eine Werkzeugmaschine.**

(30) Priorität: 23.09.81 DE 3137878

(43) Veröffentlichungstag der Anmeldung:
30.03.83 Patentblatt 83/13

(45) Bekanntmachung des Hinweises auf die Patenterteilung:
27.12.85 Patentblatt 85/52

(84) Benannte Vertragsstaaten:
CH DE FR GB LI SE

(56) Entgegenhaltungen:
DE - A - 2 501 447
DE - B - 1 043 725
DE - B - 1 083 604
DE - C - 466 576
FR - A - 2 177 211
GB - A - 1 528 181
US - A - 2 615 373
US - A - 3 171 511
US - A - 3 244 038
US - A - 3 511 444

(73) Patentinhaber: Oerlikon-Boehringer GmbH, Stuttgarter Strasse 50 Postfach 220, D-7320 Göppingen (DE)

(72) Erfinder: Horsky, Anton, Wangener Strasse 35, D-7320 Göppingen (DE)
Erfinder: Kuhn, Siegfried, Kornbergstrasse 28/1, D-7321 Dürnau (DE)
Erfinder: Voss, Wolf-Dietrich, Erlengrund 10, D-7325 Boll (DE)

(74) Vertreter: Vogeser, Werner, Dipl.-Ing. et al, Patentanwälte Hansmann & Vogeser Albert-Rosshaupter-Strasse 65, D-8000 München 70 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Überlastsicherung für eine Werkzeugmaschine entsprechend dem Oberbegriff des Anspruchs 1.

Bei Werkzeugmaschinen ist es bekannt, zwischen der Spindel zum Antrieb des Supports und dem Spindelantrieb eine Überlastkupplung vorzusehen, um den Motor abzukuppeln, wenn in einer der beiden Bewegungsrichtungen eine Kollision zwischen dem Support und einer feststehenden Baugruppe erfolgt. Derartige Kupplungen sind zwar geeignet, den Motor gegen eine Beschädigung zu schützen, verhindern jedoch nicht, daß sich die Spindel bei einer Kollision noch weiter dreht, so daß die dabei auftretenden erheblichen Kräfte zu einer Beschädigung des Supports, der Spindelmutter oder der Spindel selbst führen können.

Zum Schutz von Maschinenteilen ist es außerdem bekannt, diese durch Schraubbolzen mit einer Sollbruchstelle oder Abscherstiften zu verbinden (DE-B-1 083 604, DE-B-1 043 725, DE-C-466 576, DE-A-1 528 181, US-A-3 511 444).

Außerdem sind Überlastsicherungen bekannt (FR-A-2 177 211, DE-A-2 501 477, US-A-3 244 038), die bei einer dynamischen Überlastung ansprechen. Diese Überlastsicherungen haben auf eine bestimmte Überlastung ausgelegte Federn und sind zwischen Antriebsmotor, Getriebe, Gewindespindel und Bettschlitten einer Werkzeugmaschine nicht einsetzbar.

Weiterhin sind Überlastsicherungen bekannt (US-A-2 615 373, US-A-3 171 511), die unter Verwendung konischer Elemente arbeiten.

Der Erfindung liegt die Aufgabe zugrunde, eine Überlastsicherung zu schaffen, die eine möglichst rasche Wiedereinsetzbarkeit der Maschine nach einer Kollision zwischen dem Support und einer in dessen Bewegungsrichtung befindlichen Baugruppe ermöglicht, die also an einer leicht zugänglichen Stelle der Maschine einsetzbar ist, und die es außerdem ermöglicht, den vorherigen maßlichen Zusammenhang ohne zusätzliche Nachjustierung wieder herzustellen.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Bei einer Kollision des Supports mit einer feststehenden Baugruppe, z. B. dem Werkstückspannfutter, kommt die Antriebsspindel des Supports, der den Werkzeugschlitten trägt, nicht sofort zum Stillstand, so daß über die Spindelmutter auf die Verbindungsschraube erhebliche Kräfte in axialer Richtung ausgeübt werden. Durch geeignete Dimensionierung des auf Zug beanspruchten Sollbruchabschnittes der Verbindungsschraube kann ein Bruch bei einer bestimmten Sollbelastung erreicht werden.

Kommt es somit zu einer Kollision und zu einem Bruch am Sollbruchabschnitt, dann erfolgt eine Lösung der Verbindung zwischen der Spindelmutter und dem Support. Dabei verbleibt der zweite Gewindeabschnitt, der mittels des Schraubenkopfes der Verbindungsschraube in den Support geschraubt ist, in diesem, während sich der erste Gewindeabschnitt zusammen mit dem restlichen Sollbruchabschnitt und der Haltemutter von der Spindel löst. Der erste Gewindeabschnitt kann nun zusammen mit der Haltemutter von der Spindelmutter leicht entfernt werden; dies ist auch beim zweiten Gewindeabschnitt der Verbindungsschraube möglich, da dieser mittels des Schraubenkopfes herausgeschraubt werden kann. Durch Einsetzen einer neuen Verbindungsschraube ist somit eine leichte Reparatur möglich.

Die Gewindebohrung zur Aufnahme des zweiten Gewindeabschnitts der Verbindungsschraube ist zweckmäßigerweise so ausgebildet, daß das Gewinde auch nach mehreren Kollisionen nicht beschädigt wird. Somit ist ein Wiedereinsatz möglich.

Die Verwendung einer derartigen Verbindungsschraube hat auch den Vorteil, daß kleinere Kollosionen bei einer Wartung festgestellt werden können, da solche Kollisionen im plastischen Verformungsbereich des Sollbruchabschnitts der Verbindungsschraube zu einer Längenänderung der Verbindungsschraube führen und somit meßtechnisch erfaßt werden können.

Ein wesentlicher Vorteil der Überlastsicherung besteht darin, daß sie auf vorhandene Maschinen anwendbar ist, da die üblichen Verbindungsschrauben durch solche mit einem Sollbruchabschnitt ersetzt werden können.

Die Überlastsicherung kann in beiden Support-Bewegungsrichtungen wirksam werden. Hierzu ist der Flansch der Spindelmutter, mit dem diese üblicherweise am Support fixiert ist, durch wenigstens eine Verbindungsschraube an der Spindelmutter befestigt und diese Verbindungsschraube weist ebenfalls einen Sollbruch auf.

Die Erfindung wird nachstehend anhand der Fig. 1 bis 7 beispielsweise erläutert. Es zeigt

Fig. 1 einen Teilaxialschnitt des Maschinenbettes, des Supports und der Antriebsspindel einer Werkzeugmaschine,

Fig. 2 eine Aufsicht.einer Verbindungsschraube,

Fig. 3 schematisch eine in beiden Support-Bewegungsrichtungen wirkende Überlastsicherung,

Fig. 4 und 5 Darstellungen, aus denen die Arbeitsweise der Überlastsicherung der Fig. 3 in beiden Support-Bewegungsrichtungen hervorgeht, und

Fig. 6 und 5 Axialschnitte zweier weiterer Ausführungsformen der Verbindungsschraube.

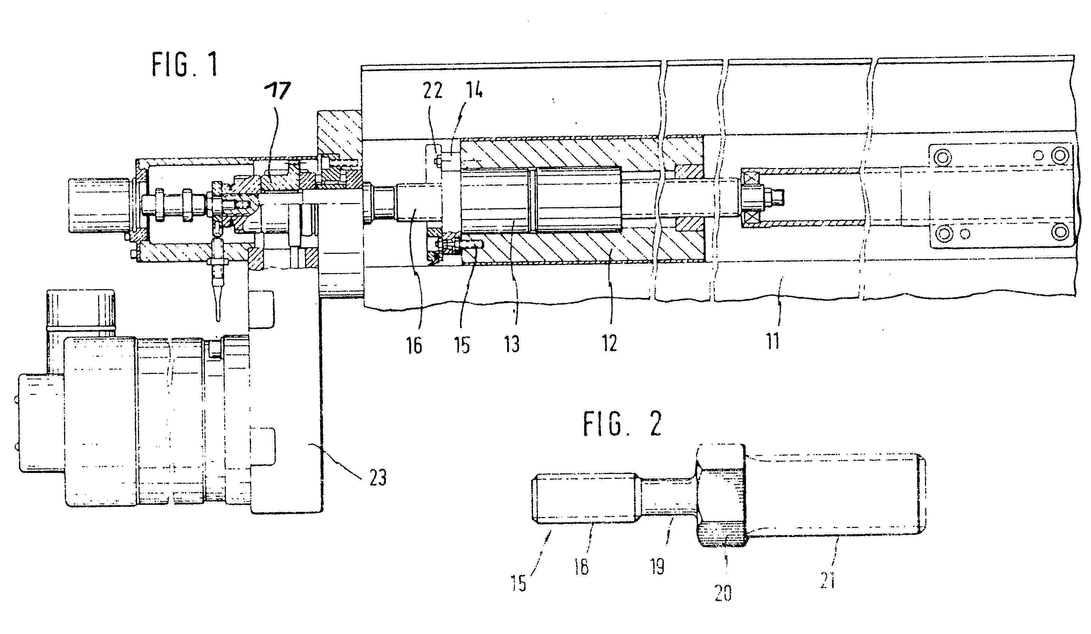

Fig. 1 zeigt einen Teil einer Werkzeugmaschine mit einem Maschinenbett 11, in dem ein Support 12 geführt ist. Im Support 12 ist eine Spindelmutter 13 gelagert, die mit einer Antriebsspindel 16 in Eingriff steht.

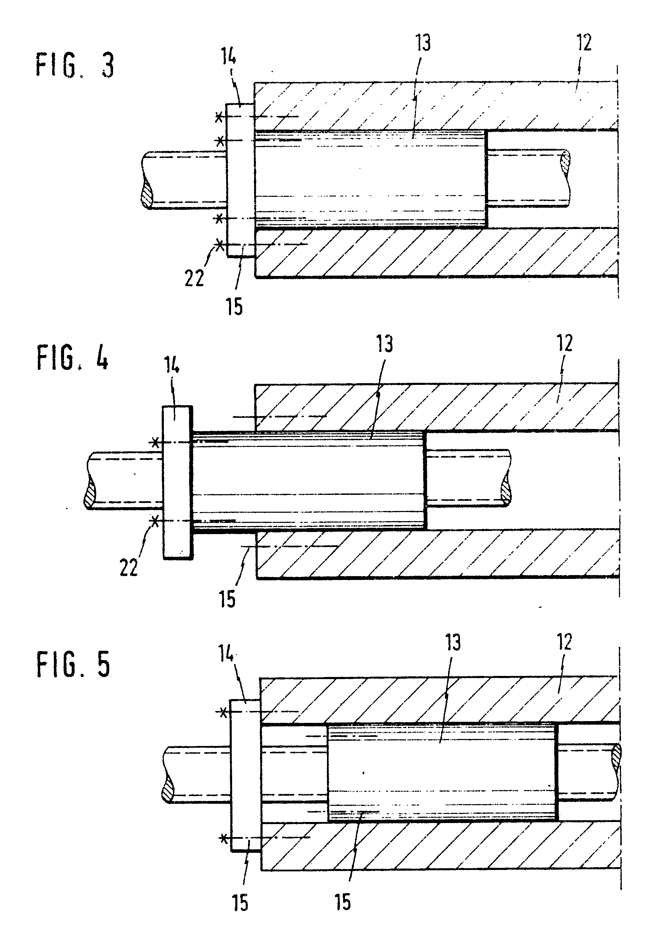

Die Spindelmutter hat einen Flansch 14, der durch Verbindungsschrauben 15 mit dem Support 12 und, wie Fig. 3 schematisch zeigt, mit der Spindelmutter 13 verbunden ist, so daß sich eine Überlastsicherung ergibt, die in beiden Support-Bewegungsrichtungen wirkt, wie aus den Fig. 4 und 5 hervorgeht. Auf der Spindel 16 sitzt ein Antriebsritzel 17, das über ein Getriebe 23 mit einem Antriebsmotor 24 in Verbindung steht.

Fig. 2 zeigt eine der Verbindungsschrauben 15. Die Schraube hat einen ersten Gewindeabschnitt 18, einen Sollbruchabschnitt 19, einen Schraubenkopf 20 und einen zweiten Gewindeabschnitt 21. Zur Verbindung zwischen der Spindelmutter 13 und dem Support 12 wird der zweite Gewindeabschnitt 21 der Schraube 15 mittels des Schraubenkopfes 20 in den Support 12 geschraubt.

Der Flansch 14 der Spindelmutter 13 hat eine Bohrung, die den Schraubenkopf 20, den Sollbruchabschnitt 19 und den ersten Gewindeabschnitt 18 aufnimmt. Der erste Gewindeabschnitt 18 steht über den Flansch 14 vor, so daß die Verbindungsschraube 15 durch eine Haltemutter 22 (Fig. 1) den Flansch 19 der Spindelmutter 13 mit dem Support 12 verbindet.

Bei einer Kollision zwischen dem Support und z. B. einem Werkstückspannfutter bewirkt die nicht sofort beendete Drehung der Spindel 16 eine axiale Verschiebung der Spindelmutter 13, der der Support 12 nicht folgen kann. Bei einer bestimmten Belastung kommt es daher an dem auf Zug beanspruchten Sollbruchabschnitt 19 der Verbindungsschraube 15 zum Bruch, so daß auf die übrigen Maschinenteile keine Kräfte mehr übertragen werden.

Fig. 4 zeigt die Wirkung der Überlastsicherung bei einer Kollision des Supports z. B. mit dem Werkstückspannfutter. In diesem Falle reißen die Verbindungsschrauben 15 ab, mit denen der Flansch 14 am Support 12 fixiert ist. Fig. 5 zeigt die Wirkung der Überlastsicherung in der entgegengesetzten Richtung. In diesem Falle reißen die Verbindungsschrauben 15 ab, mit denen der Flansch 14 an der Spindelmutter 13 fixiert ist.

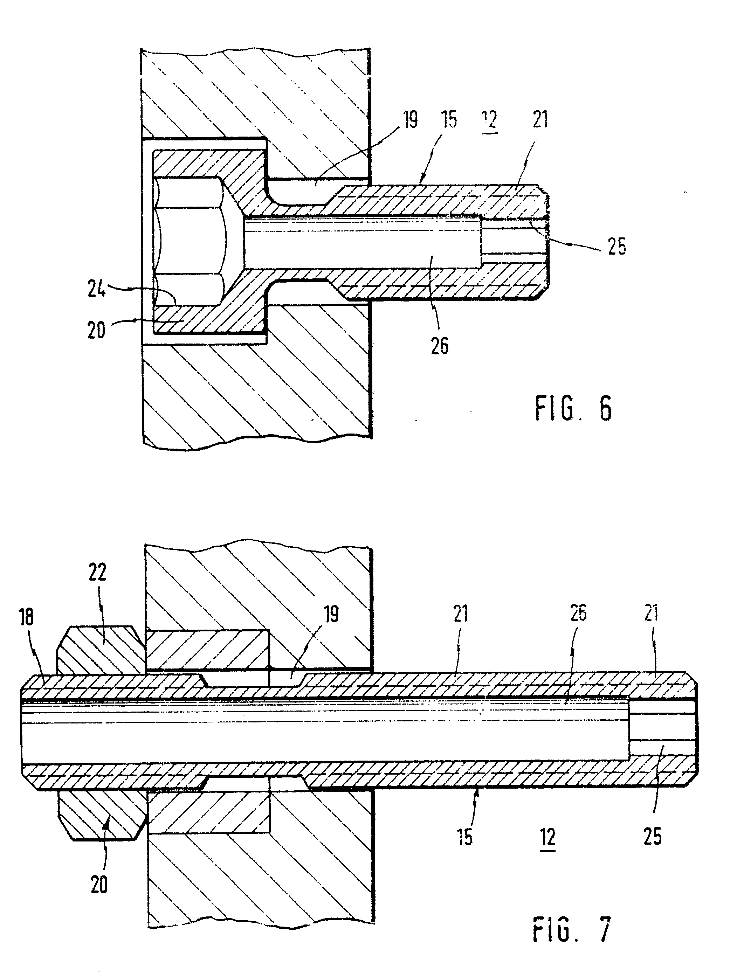

Fig. 6 zeigt eine Verbindungsschraube 15, die aus einem Schraubenkopf 20, einem sich daran anschließenden Sollbruchabschnitt 19 und einem Gewindeabschnitt 21 besteht. Der Schraubenkopf 20 und der Gewindeabschnitt 21 haben jeweils eine Sechskantbohrung 24 bzw. 25 zur Aufnahme eines Steckschlüssels, die durch eine den freien Durchgang des Steckschlüssels ermöglichende Bohrung 26 verbunden sind. Die Verbindungsschraube kann somit mit Hilfe eines zwei Sechskantabschnitte aufweisenden Steckschlüssels, der in die beiden unterschiedlichen Sechskantbohrungen 24 und 25 eingreift, in den Support 12 geschraubt werden. Es kann selbstverständlich auch ein Steckschlüssel verwendet werden, der nur in die Sechskantbohrung 25 des Gewindeabschnitts 21 greift. Das Festziehen der Verbindungsschraube wird in der gleichen Weise durchgeführt.

Der fertigungstechnische Vorteil dieser Schraube liegt darin, daß sie aus einer üblichen Schraube herstellbar ist. Der anwendungstechnische Vorteil liegt darin, daß der Sollbruchabschnitt 19 beim Einsetzen der Schraube nicht beansprucht wird.

Fig. 7 zeigt eine weitere Verbindungsschraube, bei der der Gewindekopf 20 aus einem Gewindeabschnitt 18 und einer auf diesen aufschraubbaren Mutter 22 besteht und der Gewindeabschnitt 21 eine Mehrkantbohrung 25 für einen Steckschlüssel aufweist, die durch eine den Durchgang des Steckschlüssels ermöglichende Bohrung 28 mit dem mutterseitigen Ende verbunden ist. Eine derartige Verbindungsschraube kann aus einem Gewindestift hergestellt werden, d. h. daß die beiden Gewindeabschnitte 18 und 21 gleiche Gewinde haben.

**Patentansprüche**

1. Überlastsicherung für eine Werkzeugmaschine, bei der ein im Maschinenbett geführter Support mittels einer Spindel zwischen dem Reitstock und dem Spindelkasten über einen Antriebsmotor und ein Vorschubgetriebe verschiebbar und mit der Spindel durch eine einen Flansch aufweisende Spindelmutter verbunden ist, dadurch gekennzeichnet, daß wenigstens eine Verbindungsschraube (15) den Flansch (14) der Spindelmutter (13) mit dem Support (12) und wenigstens eine Verbindungsschraube (15) den Flansch (14) mit der Spindelmutter (13) verbindet, und daß die Verbindungsschrauben einen Sollbruchabschnitt (19) aufweisen.

2. Überlastsicherung nach Anspruch 1, dadurch gekennzeichnet, daß jede Verbindungsschraube (15) aus einem ersten Gewindeabschnitt (16), dem Sollbruchabschnitt (19), einem Schraubenkopf (20) und einem zweiten Gewindeabschnitt (21) besteht, von denen der zweite Gewindeabschnitt (21) mittels des Schraubenkopfes (20) in den Support (12) geschraubt ist, und der erste Gewindeabschnitt (18) mittels einer Mutter (22) die Spindelmutter (13) fixiert.

3. Überlastsicherung nach Anspruch 1, dadurch gekennzeichnet, daß die Spindelmutter (13) einen Flansch (14) aufweist, der mittels der Verbindungsschraube (15) am Support (12) fixiert ist.

4. Überlastsicherung nach Anspruch 3, dadurch gekennzeichnet, daß der Flansch (14) eine Bohrung aufweist, in der sich ein Teil des ersten Gewindeabschnittes (18), der Sollbruchabschnitt (19) und der Schraubenkopf (20) befinden.

5. Überlastsicherung nach Anspruch 3 oder 4, dadurch gekennzeichnet, daß die Spindelmutter (13) eine Gewindebohrung aufweist, in die die Verbindungsschraube (15) mit dem zweiten Gewindeabschnitt (21) geschraubt ist.

6. Überlastsicherung nach Anspruch 1, dadurch gekennzeichnet, daß die Verbindungsschraube (15) aus einem Schraubenkopf (20), dem Sollbruchabschnitt (19) und einem Gewindeabschnitt (21) besteht, von denen der Schraubenkopf (20) und der Gewindeabschnitt (21) je eine Mehrkantbohrung (24, 25) zur Aufnahme eines Steckschlüssels aufweisen, die durch eine den Durchgang des Steckschlüssels ermöglichende Bohrung (26) verbunden sind, und dadurch, daß die Verbindungsschraube (15) mittels des Gewindeabschnittes (21) in den Support (12) geschraubt ist und mittels des Schraubenkopfes (20) die Spindelmutter (13) fixiert.

7. Überlastsicherung nach Anspruch 6, dadurch gekennzeichnet, daß die Mehrkantbohrungen (24, 25) unterschiedlichen Durchmesser haben.

8. Überlastsicherung nach Anspruch 1, dadurch gekennzeichnet, daß die Verbindungsschraube (15) aus einem Schraubenkopf (20), dem Sollbruchabschnitt (19) und einem Gewindeabschnitt (21) besteht, von denen der Gewindeabschnitt (21) eine Mehrkantbohrung (25) zur Aufnahme eines Steckschlüssels aufweist, die durch eine den Durchgang des Steckschlüssels ermöglichende Bohrung (26) mit dem schraubenkopfseitigen Ende der Verbindungsschraube (15) verbunden ist, und dadurch, daß die Verbindungsschraube (15) mittels des Gewindeabschnittes (21) in den Support (12) geschraubt ist und mittels des Schraubenkopfes (20) die Spindelmutter (13) fixiert.

9. Überlastsicherung nach Anspruch 8, dadurch gekennzeichnet, daß der Schraubenkopf (20) aus einem Gewindeabschnitt (18) und einer zugehörigen Mutter (22) besteht.


## Claims

1. Overload protection device for a machine tool, in which a support guided in the machine bed is movable between the tailstock and the spindle casing by means of a spindle, a drive motor and a feeding drive and is connected to the spindle by a spindle nut having a flange, characterised in that at least one connecting screw (15) connects the flange (14) of the spindle nut (13) to the support (12) and at least one connecting screw (15) connects the flange (14) to the spindle nut (13), and that the connecting screws have a breaking portion (19).

2. Overload protection device according to claim 1, characterised in that each connecting screw (15) comprises a first threaded portion (16), the breaking portion (19), a screw head (20) and a second threaded portion (21), the second threaded portion (21) being screwed into the support (12) by means of the screw head (20), and the first threaded portion (18) being secured to the spindle nut (13) by means of a nut (12).

3. Overload protection device according to claim 1, characterised in that the spindle nut (13) has a flange (14) which is secured to the support (12) by means of the connecting screw (15).

4. Overload protection device according to claim 3, characterised in that the flange (14) has a bore in which a part of the first threaded portion (18), the breaking portion (19) and the screw head (20) are located.

5. Overload protection device according to claim 3 or 4, characterised in that the spindle nut (13) has a threaded bore in which the connecting screw (15) is screwed by means of the second threaded portion (21).

6. Overload protection device according to claim 1, characterised in that the connecting screw (15) comprises a screw head (20), the breaking portion (19), and a threaded portion (21), the screw head (20) and the threaded portion (21) each having a multi-sided bore (24, 25) for the reception of a box spanner and the bores being connected by a passage (26) allowing reception of the box spanner, and in that the connecting screw (15) is screwed into the support (12) by means of the threaded portion (21) and is secured to the spindle nut (13) by means of the screw head (20).

7. Overload protection device according to claim 6, characterised in that the multi-sided bores (24, 25) have different diameters.

8. Overload protection device according to claim 1, characterised in that the connecting screw (15) comprises a screw head (20), the breaking portion (19) and a threaded portion (21), the threaded portion (21) having a multi-sided bore (25) for reception of a box spanner and the bore being connected to the screw head end of the connecting screw (15) by a passage (26) allowing reception of the box spanner, and in that the connecting screw (15) is screwed into the support (12) by means of the threaded portion (21) and is secured to the spindle nut (13) by means of the screw head (20).

9. Overload protection device according to claim 8, characterised in that the screw head (20) comprises a threaded portion (18) and an associated nut (22).


## Revendications

1. Agencement empêchant la surcharge d'une machine-outil dans laquelle un support quidé dans le banc de la machine peut se déplacer au moyen d'un arbre entre la contre-poupée et la poupée fixe par l'intermédiaire d'un moteur de commande et d'un mécanisme d'avancement et est connecté avec l'arbre par un fourreau d'arbre présentant une bride, caractérisé en ce qu'au moins une vis de liaison (15) relie la bride (14) du fourreau d'arbre (13) au support (12) et au moins une vis de liaison (15) relie la bride (14) au fourreau d'arbre (13) et en ce que les vis de liaison présentent une section (19) destinée à la rupture.

2. Agencement selon la revendication 1, caractérisé en ce que chaque vis de liaison (15) est constituée par une première section filetée (16), la section (19) destinée à la rupture, une tête de vis (20) et une deuxième section filetée (21), la seconde section (21) filetée étant vissée au moyen de la tête de vis (20) dans le support (12) et la première section (18) filetée fixant au moyen d'un écrou (22) le fourreau d'arbre (13).

3. Agencement selon la revendication 1, caractérisé en ce que le fourreau d'arbre (13) présente une bride (14) qui est fixée au support (12) au moyen de la vis de liaison (15).

4. Agencement selon la revendication 3, caractérisé en ce que la bride (14) présente un alésage dans lequel se trouvent une partie de la première section filetée (18), la section (19) destinée à la rupture et la tête de vis (20).

5. Agencement selon la revendication 3 ou la revendication 4, caractérisé en ce que le fourreau d'arbre (13) présente un alésage taraudé dans lequel la vis de liaison (15) est vissée avec la deuxième section filetée (21).

6. Agencement selon la revendication 1, caractérisé en ce que la vis de liaison (15) est constituée par une tête de vis (20), par la section destinée à la rupture (19) et par une section filetée (21), la tête de vis (20) et la section filetée (21) présentant chacune un alésage polygonal (24, 25) pour recevoir une clef d'insertion, les alésages (24, 25) étant réunis par un alésage (26) permettant le passage de la clé, et en ce que la vis de liaison (15) est vissée au moyen de la section filetée (21) dans le support (12) et fixe au moyen de la tête de vis (20) le fourreau d'arbre (13).

7. Agencement selon la revendication 6, caractérisé en ce que les alésages polygonaux (24, 25) ont des diamètres différents.

8. Agencement selon la revendication 1, caractérisé en ce que la vis de liaison (15) est constituée par une tête de vis (20), la section (19) destinée à la rupture et une section filetée (21), la section filetée (21) présentant un alésage polygonal (25) pour recevoir une clé d'insertion qui est reliée, par un alésage (26) permettant le passage de ladite clé, à l'extrémité du côté de la tête de vis de la vis de liaison (15), et en ce que la vis de liaison (15) est vissée au moyen de la section filetée (21) dans le support (12) et fixe le fourreau d'arbre (13) au moyen de la tête de vis (20).

9. Agencement selon la revendication 8, caractérisé en ce que la tête de vis (20) est constituée par une section filetée (18) et un écrou correspondant (22).

FIG. 1

FIG. 2

FIG. 3

FIG. 4

FIG. 5

FIG. 6

FIG. 7